# EUROPEAN PATENT APPLICATION

(11) **EP 1 503 442 A2**
(43) Date of publication of application: **02.02.2005**
(21) Application number: 04254325.6
(22) Date of filing: 19.07.2004
(51) Int. Cl.: H01M 8/02

(54) **Fuel cell support structure and method of manufacture**

(30) Priority: 28.07.2003 US 629116
(71) Applicant: Hewlett-Packard Development Company, L.P., Houston, Texas 77070 (US)
(72) Inventor: Mardilovich, Peter, Corvallis, OR 97330 (US); Herman, Gregory S., Albany, OR 97321 (US); Champion, David, Lebanon, OR 97355 (US); O'Neil, James, Corvallis, OR 97330 (US)
(74) Representative: Powell, Stephen David

(57) **Abstract**

A method of fabricating a fuel cell support structure (110) includes forming a plurality of pores (150) through a substrate (330) and actively controlling a shape or size of the pores (150) formed through the substrate (330). In a fuel cell (100) comprising the substrate (330), the substrate supports a cathode (140), anode (130) and electrolyte (120).

## Description

During the past several years, the popularity and viability of fuel cells for producing both large and small amounts of electricity has increased significantly. Fuel cells conduct an electrochemical reaction with reactants such as hydrogen and oxygen to produce electricity and heat. Fuel cells are similar to batteries except they can be "recharged" while providing power. In addition, fuel cells are much cooler and cleaner than other sources of power, such as devices that combust hydrocarbons.

Fuel cells provide a DC (direct current) voltage that may be used to power motors, lights, computers, or any number of electrical appliances. A typical fuel cell includes an electrolyte disposed between an anode and a cathode. There are several different types of fuel cells, each using a different chemistry. Fuel cells are usually classified by the type of electrolyte used. Fuel cell types are generally categorized into one of five groups: proton exchange membrane (PEM) fuel cells, alkaline fuel cells (AFC), phosphoric-acid fuel cells (PAFC), solid oxide fuel cells (SOFC), and molten carbonate fuel cells (MCFC).

While all fuel cells have some desirable features, solid oxide fuel cells (SOFC) have a number of distinct advantages over other fuel cell types. Some advantages of SOFC's include reduced problems with electrolyte management, increased efficiencies over other fuel cell types (up to 60% efficient), higher tolerance to fuel impurities, and the internal reforming of hydrocarbon fuels to produce, for example, hydrogen and methane.

Recent efforts have focused on expanding fuel cell applications to include increasingly smaller devices. Consequently, these recent efforts have focused on reducing the overall size of fuel cells, improving their ease of manufacture, and increasing their efficiency and stability during thermal cycling. These efforts have been limited by the difficulty in accurately and repeatably controlling the distance between the anode and cathode of the fuel cell during fabrication. These efforts have also been limited by the difficulties in controlling the transfer characteristics of the fuel cell and by the supports for the various components.

A method of fabricating a fuel cell support structure includes forming a plurality of pores through a substrate and actively controlling a shape or size of the pores formed through the substrate.

The accompanying drawings illustrate various embodiments of the present invention and are a part of the specification. The illustrated embodiments are merely examples of the present invention and do not limit the scope of the invention.

**Fig. 1** illustrates a partial section of a dual chamber fuel cell utilizing a fuel cell support structure according to one exemplary embodiment.

**Fig. 2** illustrates a partial section of a single chamber fuel cell utilizing a fuel cell support structure according to one exemplary embodiment.

**Fig. 3** illustrates a perspective view of a self-organized nanoporous ceramic as utilized in one exemplary embodiment.

**Fig. 4** illustrates a method of fabricating a fuel cell support structure according to one exemplary embodiment.

**Fig. 5A** illustrates a cross section of a fuel cell support structure and a corresponding anodization voltage profile according to one exemplary embodiment.

**Fig. 5B** illustrates a cross section of a fuel cell support structure and a corresponding anodization voltage profile according to one exemplary embodiment.

**Fig. 5C** illustrates a cross section of a fuel cell support structure and a corresponding anodization voltage profile according to one exemplary embodiment.

**Fig. 5D** illustrates a cross section of a fuel cell support structure and a corresponding anodization voltage profile according to one exemplary embodiment.

**Fig. 6** illustrates a schematic diagram of the pore morphology of a fuel cell support structure according to one exemplary embodiment.

**Fig. 7** illustrates a schematic cross section of a fuel cell according to one exemplary embodiment.

**Fig. 8** a flowchart illustrating a method of fabricating a fuel cell according to one exemplary embodiment.

**Fig. 9** illustrates a dual chamber SOFC system according to one exemplary embodiment.

**Fig. 10** illustrates a dual chamber SOFC system according to one exemplary embodiment.

**Fig. 11** illustrates a dual chamber SOFC system according to one exemplary embodiment.

**Fig. 12** illustrates a single chamber SOFC system according to one exemplary embodiment.

**Fig. 13** illustrates a single chamber SOFC system according to one exemplary embodiment.

Throughout the drawings, identical reference numbers designate similar, but not necessarily identical, elements.

A fuel cell support structure and methods for fabricating fuel cell support structures are described herein. According to one exemplary implementation more fully described below, a fuel cell support structure includes a self-organized ceramic substrate in which nanopores of selected morphology are defined. The present system will be described, for ease of explanation only, in the context of a solid oxide fuel cell (SOFC). However, structures and methods described herein may be used with other types of fuel cells. Moreover, the support structure described herein may be incorporated in any fuel requiring system.

In the following description, for purposes of explanation, numerous specific details are set forth in order to provide a thorough understanding of the invention. It will be apparent, however, to one skilled in the art that the invention may be practiced without these specific details. Reference in the specification to "one embodiment" or "an embodiment" means that a particular feature, structure, or characteristic described in connection with the embodiment is included in at least one embodiment. The appearance of the phrase "in one embodiment" in various places in the specification are not necessarily all referring to the same embodiment.

### Exemplary Structure

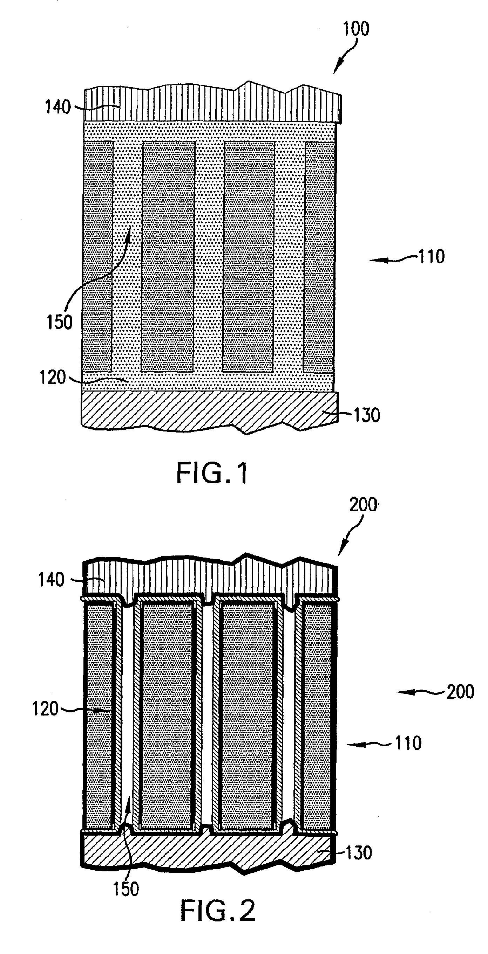

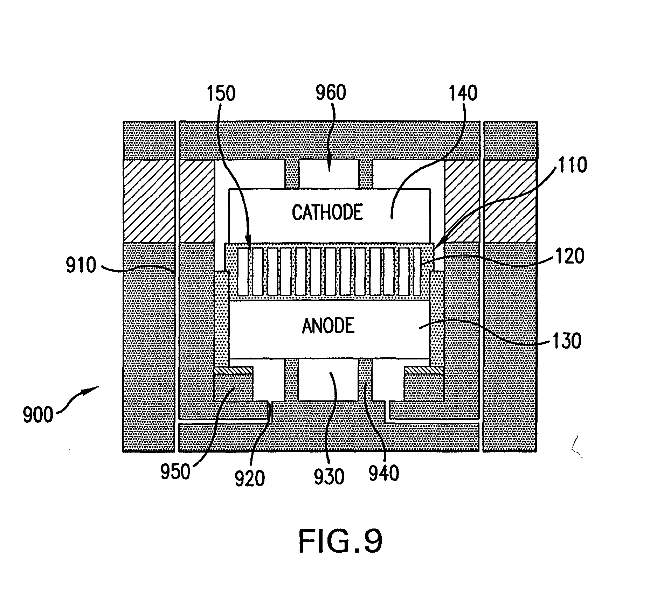

A fuel cell (100) generally includes a support structure (110), an electrolyte (120), an anode (130), and a cathode (140) as shown in Fig. 1. The fuel cell support structure (110) supports the electrolyte (120), the anode (130), and/or the cathode (140). Fig. 1 illustrates an exemplary implementation of a dual chamber fuel cell (100) utilizing a self-organized nanoporous ceramic fuel cell support structure (110). As used herein, the term "self-organized" refers to the property of the material from which the support structure is made to form parallel nanopores when the support substrate is grown, micromachined or etched as described below. The support structure may be formed, for example, from anodic alumina. In the illustrated implementation, a dense layer of electrolyte (120) is disposed in the pores (150) in the support structure (110). Further, the anode (130) and the cathode (140) are disposed on opposing sides of the support structure (110), being separated by the support structure (110) and the deposited electrolyte (120). Thus, the combination of the support structure, the electrolyte (120), the anode (130) and the cathode (140) separate the two chambers of the fuel cell system (not shown). The structure and operation of the dual chamber fuel cell will be described in more detail below with reference to Figs. 9-11. For dual chamber systems, efficiency may be affected by the need to seal two chambers from each other and by the ability to transfer ions from the cathode across the electrolyte to the anode. Precise control of the porosity characteristics of a support structure may allow for more precise formation of the electrolyte and/or electrodes on the support structure while providing for improved diffusion.

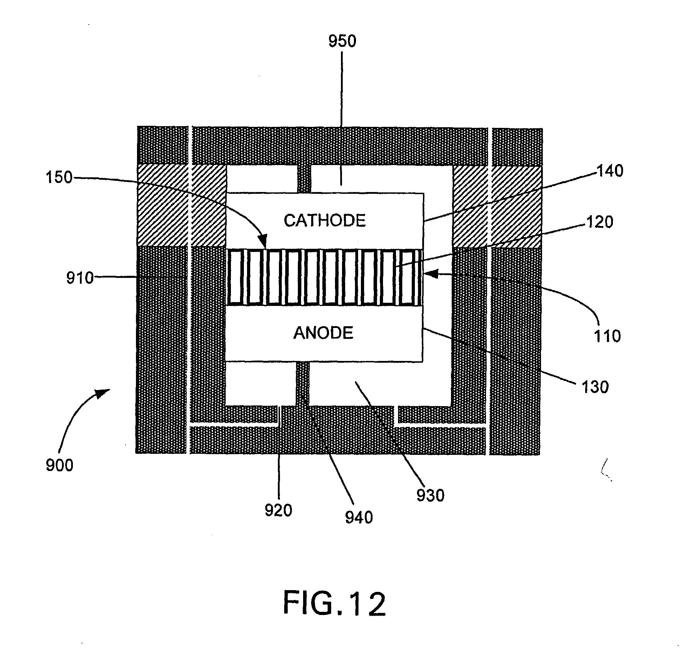

Fig. 2 illustrates an implementation of a single chamber fuel cell (200) utilizing a self-organizing ceramic fuel cell support. Similarly to Fig. 1, the electrolyte (120), the anode (130), and the cathode (140) are disposed on the support structure (110). A layer of electrolyte (120), which may be thinner than that required for the dual chamber implementation (100; Fig. 1), is disposed in the pores (150) of the support structure (110). Pores (150) extend through the support structure (110) in parallel as shown in Fig. 2. Operation of the single chamber fuel cell will be discussed in detail below with reference to Figs. 12-13. Similar to dual chamber fuel cells, single chamber fuel cells may benefit from precise control of the porosity characteristics of the support structure that allows for more precise formation of the electrolyte and/or electrodes on the support structure while providing for improved diffusion.

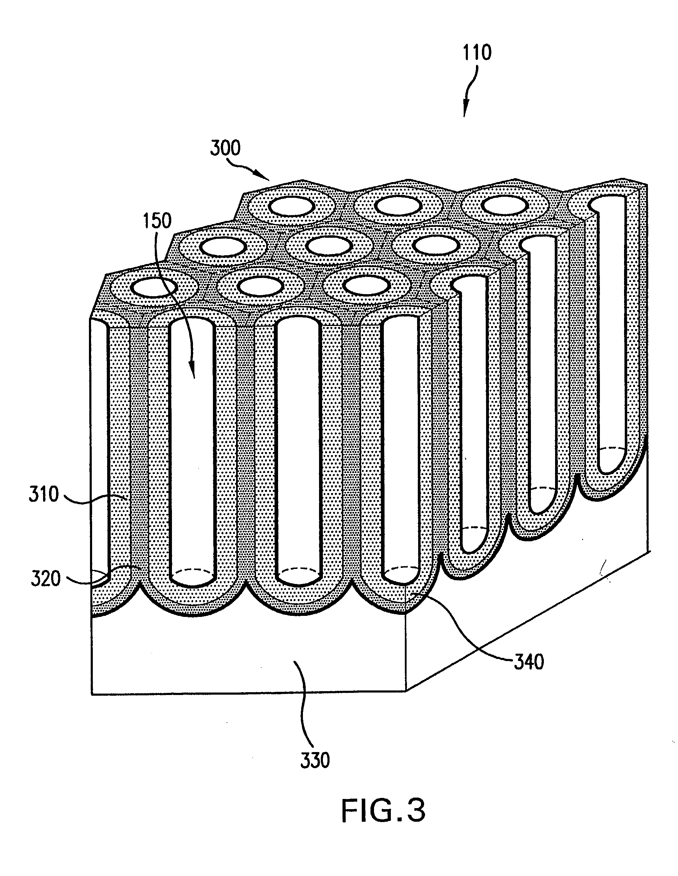

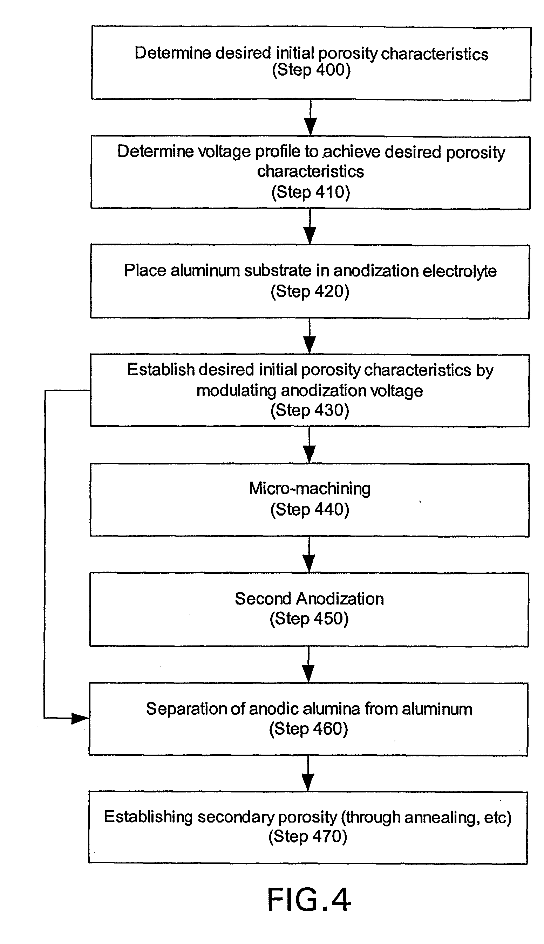

Fig. 3 is a perspective view of a more detailed exemplary arrangement of the voids or pores (150) of the support structure (110; Figs. 1-2) similar to the pores (150; Figs. 1-2) discussed above. Each cell (300) generally includes a pore (150), a portion comprising both alumina and electrolyte impurities (310), and a portion comprising relatively pure alumina (320). Further, each cell may be supported, at least initially, on an aluminum base or substrate (330). A barrier layer (340) is disposed in the bottom of each pore (150). The formation and the modulation of the arrangements similar to the arrangement illustrated in Fig. 3 will be discussed in more detail below with reference to Figs. 4-7.

### Exemplary Implementation and Fabrication

One exemplary implementation of the support structure (110, Figs. 1-2) may be fabricated according to the process shown in Fig. 4. The fabrication process may begin with determining the desired initial porosity characteristics of the supports structure (step 400). Average pore diameter varies with the anodization voltage used during the formation of anodic alumina. In addition, other factors such as the nature of the anodization electrolyte, electrolyte concentration, and tempore of the anodization may affect the pore diameter. Accordingly, a larger anodization voltage may be applied to the aluminum substrate where a larger average pore size is desired. Further, during formation porosity characteristics can be varied as the substrate is grown, thereby allowing for establishment of pore morphology including a plurality of pore sizes and for change in pore size with respect to the direction of substrate growth. Thus once the desired pore morphology has been determined (step 400), it may be necessary to calculate the anodization voltage profile necessary for the process to achieve the desired pore morphology (step 410). Next, an aluminum substrate is placed in an electrolyte solution suitable to establish a self-organized nanoporous oxide such as anodic alumina (step 420). An anodization voltage may then be applied (430) according to the anodization voltage profile determined above (step 410). At this point in the process, a self-organized nanoporous ceramic substrate is formed and may be separated from the aluminum substrate (330, Fig. 3) for use in a fuel cell support structure (110, Figs. 1-2) according to (step 460). In addition, separation of the self-organized nanoporous ceramic substrate from the aluminum substrate may open a barrier layer

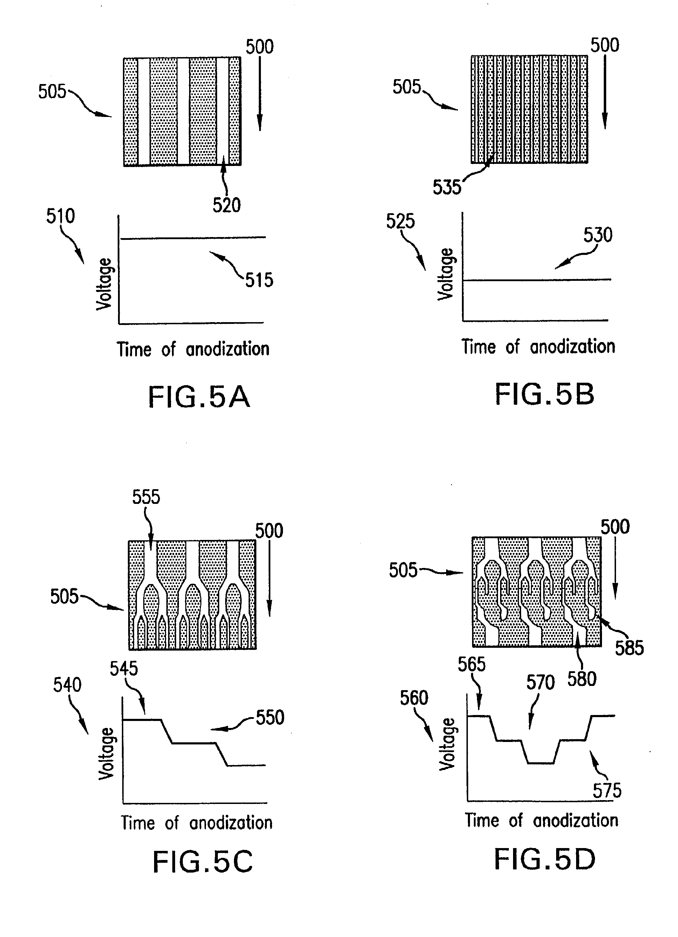

Additional processes, such as micro-machining (step 440) may be used to further achieve the desired characteristics of the fuel cell support structure (110, Figs. 1-2). This micro-machining may include, but is in no way limited to, selective etching through anisotropic anodization or local anodization. Further, this micromachining may utilize photoresist or other masks to affect selective etching or any suitable method of micro-machining. Possible exemplary implementations of micro-machined support structures, including micro-machined channels, will be discussed further below. Other additional processes may include a second anodization process (step 450), and formation of secondary porosity (step 470) through annealing or other suitable processes. These processes may be necessary to achieve such desirable characteristics that may include, but are in no way limited to, thickness, pore distribution, secondary porosity, and/or diffusion properties. As mentioned previously, average pore diameter is directly proportional to the anodization voltage. Examples of such variation are illustrated in Figs. 5A-D and will be described in detail below.

As illustrated in Figs. 5A-D, the average pore diameter of a self-organized nanoporous ceramic such as anodic alumina can be varied with respect to the direction of growth (thickness) (500) of the substrate (505) by modulating the anodization voltage with respect to time. Formation of the substrates described below may be performed according to the process described above and illustrated in Fig. 4.

The graph portion (510) of Fig. 5A illustrates an anodization voltage (515) held constant with respect to time during formation of the substrate (505). As a result of the constant anodization voltage (515), the average size of the pores (520) in the substrate (505) remains substantially constant throughout the substrate (505) with respect to thickness (500).

Similarly, the graph portion (525) of Fig. 5B illustrates an anodization voltage (530) held fairly constant during the formation of the substrate (505), though at a lower anodization voltage than that shown in Fig. 5A. As a result, the pores (535) that extend through the thickness (500) of the substrate (505) are of a smaller average pore size than the pores (520) of Fig. 5A.

The graph portion (540) of Fig. 5C illustrates an initial anodization voltage (545) followed by a series of stepped down anodization voltages (550). The result of this stepped anodization voltage profile in the formation of the substrate (505) results in a series of decreasing diameter pores (555) extending through the thickness (500) of the substrate (505).

Similarly, graph portion (560) of Fig. 5D illustrates an initial anodization voltage (565) that is first stepped down through a series of lower voltages (570) and then subsequently stepped up through a series of higher voltages (575). The pore morphology resulting from the application of this type of anodization voltage profile during formation may be seen in the varying pore sizes (580) of the substrate (505). The pore morphology seen in Fig. 5D represents the morphology of the substrate (505) as prepared. Secondary porosity may be created, which would connect the voids (585) with the pores (580).

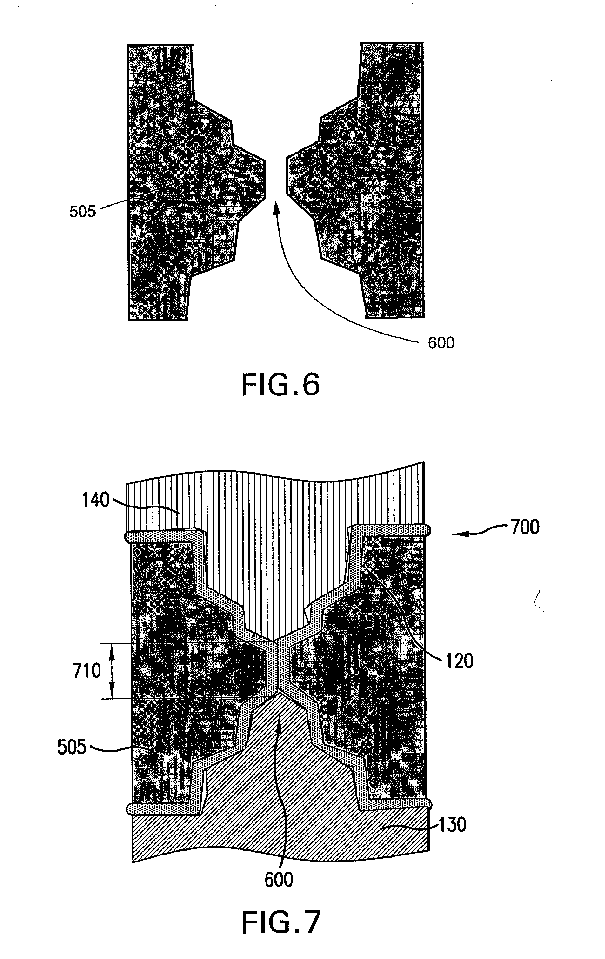

The pore morphology described in Fig. 5D may be characterized according to the schematic diagram illustrated in Fig. 6. The result of the stepped anodization voltage profile (565,570,575, Fig. 5D) is to create a throttling effect whereby the pore tapers from a large surface opening to a much smaller effective opening (600) in the substrate 505. The pore then tapers outward to another larger surface opening on the opposite side of the substrate (404).

Turning now to Fig. 7, a fuel cell (700) utilizing the pore morphology illustrated in Fig. 5D and Fig. 6 is schematically shown. The fuel cell (700) generally includes a support structure with pore morphology, an electrolyte (120), an anode (130), and a cathode (140). In the illustrated implementation, the stepped geometry of the pores (580) may allow for the electrolyte (120) to have enhanced surface area in contact with anode (130) and cathode (140) while maintaining a precise distance (710) between the anode (130) and cathode (140) across the small effective opening (600). Such enhanced surface area may provide for a reduction in electrode polarization losses due to the decrease in the number of ions transferred from the electrodes to the electrolyte, or vice a versa, per unit area at a specified current. Further, the precise and repeatable control of the distance (710) between the anode (130) and the cathode (140) may further enhance diffusion by allowing for precise control of the deposition of a layer of electrolyte (120) between, the anode (130), and/or the cathode (140).

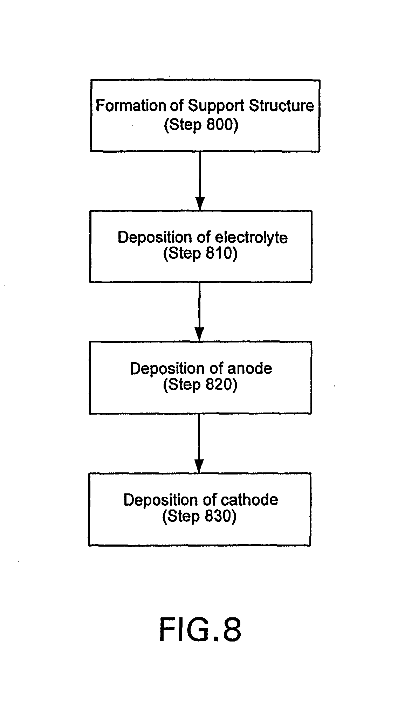

The fuel cell illustrated above, and indeed many variations of the fuel cell described above may be formed by the process shown in the flowchart of Fig. 8. The formation processes described above with reference to Fig. 4 have been summarized in Fig. 8 as formation of support structure (step 800). Once the support structure has been formed (according to any of the processes illustrated in Fig. 4), an electrolyte may deposited (step 810). Any suitable method of depositing the electrolyte may be used, including, but not limited to such methods as CVD, ALC, etc. Once the electrolyte has been deposited, the anode may be deposited by any suitable method (step 820). Finally, a cathode may be deposited by any suitable method (step 830). Those of skill in the art will recognize that the order of deposition of the electrolyte and the electrodes may be performed in any order.

The cathode (140) of the SOFC illustrated in the figures may be any cathode capable of converting oxygen or air and electrons into oxygen ions including, but in no way limited to a mixed conducting perovskite such as lanthanum manganite (LaMnO₃). The anode (130) illustrated in the figures may be any anode capable of releasing electrons to an external circuit when a fuel such as hydrogen or methane is received and reacts with the oxygen ions. The materials used to form the anode may include, but are in no way limited to, a ceramic/metal composite such as an electronically conducting nickel/yttria-stabilized zirconia cermet. The electrolyte may be any oxygen ion conducting electrolyte including, but in no way limited to, zirconia-based electrolytes such as yttria-stabilized zirconia, gadolinium-doped ceria, Ba₂In₂O₅, or a (strontium, magnesium)-doped LaGaO₃ (LSGM).

### Alternative Embodiments

Fig. 9 is an exploded cross-sectional view of an assembled exemplary dual chamber SOFC system similar to the fuel cell shown in Fig. 1 that includes fuel cell support structure (110). As illustrated in Fig. 9, an assembled SOFC system includes an SOFC housing (900) having a number of fuel feed troughs (910) and a fuel manifold (920) coupled to each fuel feed through (910), fuel channels (930), a fuel channel extrusions (940), and fuel cell support shelves (950). The fuel manifolds (920) are configured such that they are fluidly coupled to the fuel channels (930). Seated on top of the fuel channel extrusions (940) and the fuel cell supporting shelves (950) is an SOFC including fuel cell support structure (110), electrolyte (120), anode (130) and cathode (140).

The electrolyte (120) located between the anode (130) and the cathode (140) conducts oxygen ions from air in the air chamber (960) on the cathode side of the SOFC to the anode side where those ions react with the fuel in the fuel channels (930). Upon reacting with the hydrogen or methane fuel, water (and carbon dioxide in the case of methane) and electricity are produced. The electricity may then be transferred from current collectors on the anode and cathode (not shown) to an external circuit as useable electricity. Thus, the fuel cell may be coupled to an electronic device to provide power. In the illustrated implementation, the pores (150) of the support structure (110) are of substantially uniform diameter.

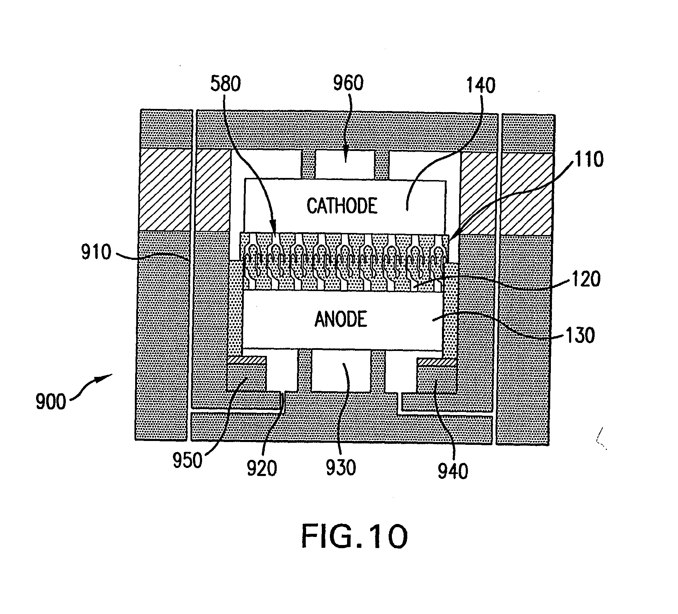

Fig. 10 shows an implementation of a dual chamber SOFC fuel cell system similar to that of Fig. 9 wherein the pores (580, Fig. 5D) include the pore morphology of Fig. 5D. The stepped geometry of the pores (580) may allow for the electrolyte (120) to have enhanced surface area in contact with anode (130) and cathode (140) while maintaining a precise distance (710; Fig. 7) between the anode (130) and cathode (140) across the small effective opening (600; Figs. 6-7). Such enhanced surface area may provide for the use of a very thin layer of electrolyte (120), which in turn may enhance the performance characteristics of the fuel cell system.

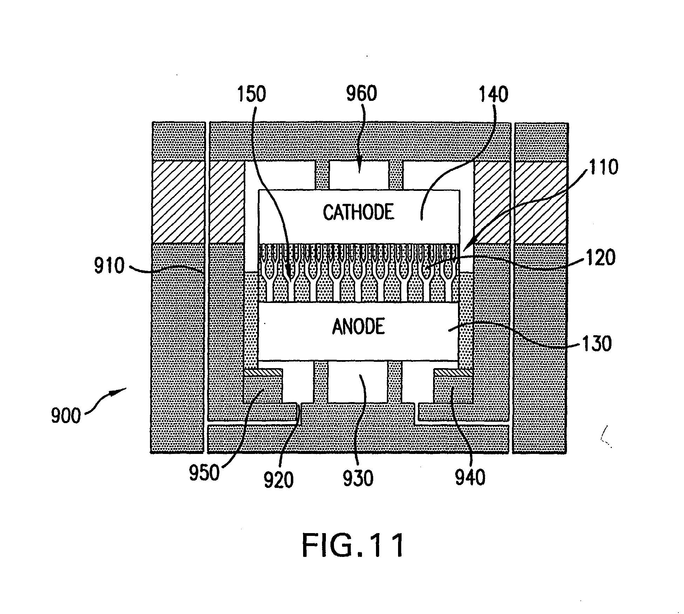

Fig. 11 illustrates an implementation of a dual chamber SOFC fuel cell system similar to that of Fig. 9 wherein the pores (555, Fig. 5C) include the pore morphology of Fig. 5C. The pores (555) are larger near the cathode (140) and smaller near the anode (120). Such a configuration may provide for enhanced diffusion across the electrolyte (120) and for the use of a very thin layer of electrolyte (120). These characteristics may in turn allow for enhanced performance characteristics of the fuel cell system.

Fig. 12 shows an implementation of a single chamber SOFC fuel cell system utilizing a similar support structure (110) to that shown in Fig. 2. The single chamber fuel cell operates similarly to dual chamber fuel cells, but the two chambers (930, 950) are in fluid communication one with another. Single chamber fuel cells do not require seals to separate the chambers as in dual chamber designs.

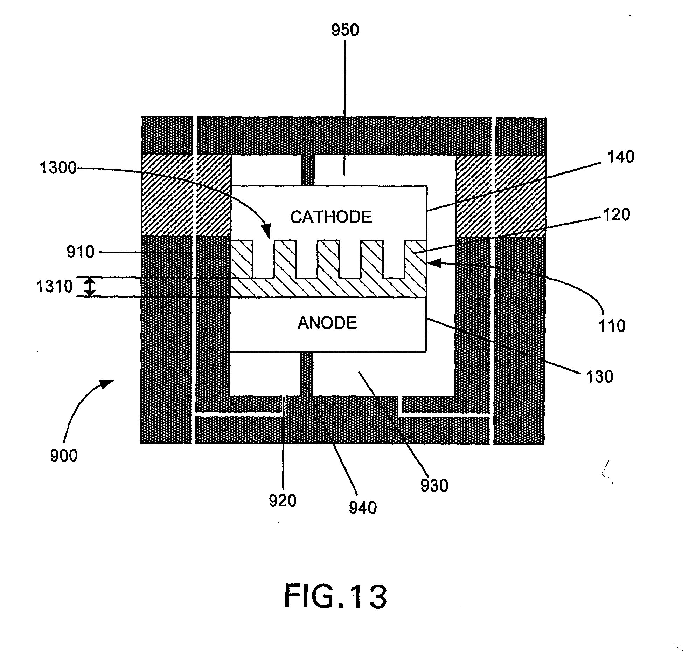

Fig. 13 shows an implementation of a single chamber SOFC fuel cell system utilizing a fuel support structure formed according to the full process illustrated in Fig. 4. More specifically, the fuel cell support structure includes micro-machined channels (1300). The micro-machined channels may allow for the electrolyte (120) to have enhanced surface area in contact with cathode (140) while maintaining a precise distance (1310) between the anode (130) and cathode (140). Such enhanced surface area may provide for the use of a very thin layer of electrolyte (120) and enhanced diffusion, which in turn may enhance the performance characteristics of the fuel cell system.

The preceding description has been presented only to illustrate and describe embodiments of invention. It is not intended to be exhaustive or to limit the invention to any precise form disclosed. Many modifications and variations are possible in light of the above teaching. It is intended that the scope of the invention be defined by the following claims.

## Claims

1. A method of fabricating a support structure (110), comprising:
forming a plurality of pores (150) through a substrate (330); and
actively controlling a shape or size of said pores (150) formed through said substrate (330).

2. The method of claim 1, wherein said controlling a shape of said pores (150) comprises forming pores (150) having a diameter that varies along a length of the pore (150) through said substrate (330).

3. The method of claim 1, wherein said controlling a shape of said pores (150) comprises forming pores (150) that each comprise a surface opening and a narrower opening interior to said substrate (330) wherein said pore (150) tapers inward from said surface opening to said narrower opening.

4. The method of claim 1, wherein said controlling a shape or size of said pores (150) comprises modulating a voltage applied during formation of said pores (150).

5. The method of claim 1, further comprising creating secondary porosity in said substrate (330).

6. A method of fabricating a fuel cell support structure (110), comprising:
forming a plurality of pores (150) through a substrate (330); and
actively controlling a shape or size of said pores (150) formed through said substrate (330).

7. A method of forming a fuel cell (100), comprising:
forming a plurality of pores through a substrate;
actively controlling a shape or size of said pores formed through said substrate; and
forming an electrolyte, an anode, and a cathode on said substrate.

8. A fuel cell (100) comprising:
a support substrate (330) supporting a cathode (140), anode (130) and electrolyte (120); and
a plurality of pores (150) formed through said substrate (330), said pores (150) having a size and shape formed in accordance with a pre-selected desired porosity.

9. The fuel cell (100) of claim 8, wherein said electrolyte (120) is deposited in said pores (150).

10. An apparatus comprising:
a power-consuming device;
a fuel cell (100) providing power to said device, said fuel cell (100) comprising:
a support substrate (330) supporting a cathode (140), anode (130) and electrolyte (120); and
a plurality of pores (150) formed through said substrate (330), said pores (150) having a size and shape formed in accordance with a pre-selected desired porosity.
